# EUROPÄISCHE PATENTSCHRIFT

(11) **EP 2 942 528 B1**
(45) Veröffentlichungstag und Bekanntmachung des Hinweises auf die Patenterteilung: **09.10.2019**
(21) Anmeldenummer: 15001105.4
(22) Anmeldetag: 16.04.2015
(51) Int. Cl.: F04D 29/60, F04D 15/00, F04D 29/42, F04D 13/06, F04B 17/03, F04B 53/16, F04B 53/22, G01L 23/08

(54) **PUMPENAGGREGAT MIT ELEKTROMOTOR**
PUMP UNIT WITH ELECTRIC MOTOR
GROUPE MOTOPOMPE DOTÉ D'UN MOTEUR ELECTRIQUE

(30) Priorität: 06.05.2014 DE 102014006556
(43) Veröffentlichungstag der Anmeldung: 11.11.2015
(73) Patentinhaber: Thomas Magnete GmbH, 57562 Herdorf (DE)
(72) Erfinder: Schonlau, Jürgen, 57567 Daaden (DE); Leinweber, Marc, 57290 Neunkirchen (DE); Ermert, Markus, 57299 Burbach (DE)

(56) Entgegenhaltungen:
- EP-A1- 1 217 217
- DE-A1-102007 059 240
- DE-A1-102012 202 162
- DE-T2- 60 309 123
- US-A- 4 470 427
- US-A- 5 135 031

## Beschreibung

Die Erfindung betrifft ein Pumpenaggregat mit einem Elektromotor entsprechend dem Oberbegriff des ersten Patentanspruchs. Pumpenaggregate mit einem Elektromotor sind bekannt, zum Beispiel aus den Druckschriften US5778671A, DE 603 09 123 T2, US 4470427 A.

DE 10 2012 202162 A1 offenbart ein Pumpenaggregat gemäß dem Oberbegriff des Anspruchs 1.

Das Pumpenaggregat ist mit einem elektrischen Drucksensor ausgerüstet, der so mit einer für den Elektromotor ohnehin vorhandenen Steckverbindung verbunden ist, dass keine elektrischen Leitungen außerhalb der Gehäuse des Elektromotors oder der Steckverbindung verlegt werden müssen. Auch eine an das Pumpenaggregat angeschlossene hydraulische Drossel ist in dem Gehäuse des Pumpenaggregats angeordnet.

Aufgabengemäß soll das Pumpenaggregat leicht in ein übergeordnetes Aggregat, das die erforderlichen fluidischen Leitungen enthält, durch Einschieben zu fügen sein.

Die Aufgaben werden durch die Merkmale des ersten Patentanspruchs gelöst, in Verbindung mit vorteilhaften Weiterbildungen, die in den Unteransprüchen angegeben sind.

Der Drucksensor ist im Gehäuse der Steckverbindung oder in einem Teil des Pumpengehäuses angeordnet, damit können die elektrischen Leitungen des Drucksensors im Inneren dieser Gehäuse verlegt werden und erschweren das Einschieben des Pumpenaggregats in das übergeordnete Aggregat nicht. Fluidisch ist der Drucksensor durch eine vorzugsweise parallel zur Achse des Pumpenaggregats verlaufende Bohrung mit einer der beiden Anschlussleitungen, nämlich der Druckleitung, verbunden.

Die genannte Bohrung und der hydraulische Teil des Drucksensors sind gemeinsam durch eine Dichtung zum Gehäuse der Steckverbindung und zur Umgebung abgedichtet.

Der Elektromotor läuft nicht im Arbeitsfluid der Pumpe, sondern trocken und wird deshalb durch eine Wellendichtung und eine statische Dichtung zur Pumpe hin abgedichtet.

Damit wird erreicht, dass die elektrischen Leitungen des Aggregats nicht abgedichtet werden müssen.

Zur weiteren Vereinfachung des Einbaus des Pumpenaggregats in das übergeordnete Aggregat wird eine zusätzlich erforderliche hydraulische Drossel zwischen den beiden an die Pumpe angeschlossenen Leitungen im Gehäuse der Pumpe angeordnet. Damit ist es nicht erforderlich, diese Drossel mit zusätzlichen Bohrungen anzuschließen, und bei dem Test des Pumpenaggregats vor dem Einbau ist die Drossel schon mit der Pumpe verbunden und die Pumpe wird mit der Drossel zusammen getestet.

Die Drossel erfüllt den Zweck, die Fördermenge der Pumpe vorrangig von der Drehzahl des Elektromotors und der Druckdifferenz zwischen den Leitungen (5) und (6) abhängt, und erheblich weniger von der Temperatur des Arbeitsfluids.

Das erfindungsgemäße Pumpenaggregat findet Anwendung in Fahrzeuggetrieben und Fahrzeugmotoren zur drehzahlunabhängigen Versorgung dieser Aggregate mit Arbeitsfluid, vorzugsweise mit Öl, zur Schmierung, Kühlung und Betätigung zum Beispiel von Kupplungen und Nockenwellenverstelleinrichtungen.

Bilder:
Fig. 1 stellt das Pumpenaggregat mit einer Anordnung des Drucksensors im Steckergehäuse dar
Fig. 2 stellt das Pumpenaggregat mit einer Anordnung des Drucksensors im Motorgehäuse dar

### Beispielhafte Ausführung

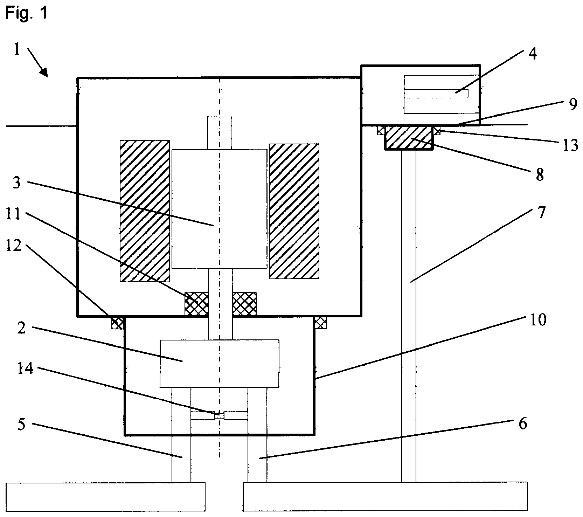

Ein Pumpenaggregat (1) gemäß Fig. 1, bestehend aus einer hydrostatischen Pumpe (2) und einem Elektromotor (3), ist über eine Steckverbindung (4) elektrisch mit einer elektrischen Steuerung und fluidisch über eine ersten Leitung (5) und eine zweiten Leitung (6) mit einem Verbraucher oder einer Mehrzahl von Verbrauchern verbunden.

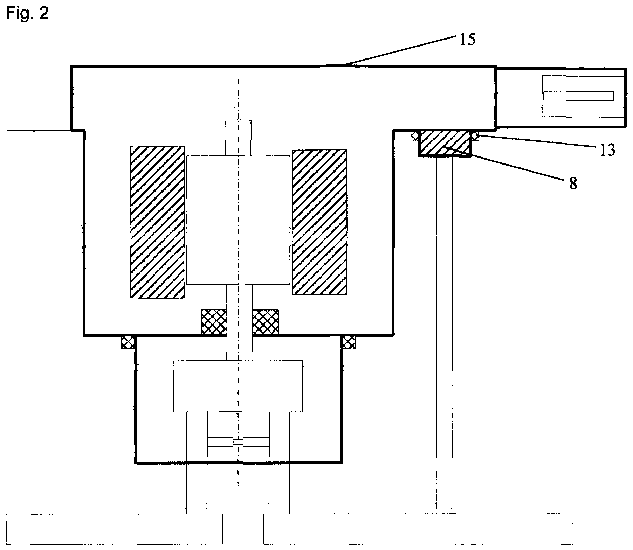

Die zweite Leitung (6) ist durch mindestens eine Bohrung (7) mit einem Drucksensor (8) verbunden, der mit der Steckverbindung (4) ein gemeinsames Gehäuse (9) aufweist, oder, wie in Fig. 2 gezeigt, mit einem Teil des Motorgehäuses (15) ein gemeinsames Gehäuse aufweist. Dadurch wird erreicht, dass die elektrischen Leitungen von der Steckverbindung (4) zu dem Drucksensor nicht außerhalb des Gehäuses (15) oder (10) verlegt werden müssen.

Die Abdichtung für das Arbeitsfluid der Pumpe (2) zur Umgebung hin erfolgt zwischen der Pumpe (2) und dem Elektromotor (3) einerseits und am Drucksensor (8) andererseits derart, dass alle elektrischen Leitungen zum Elektromotor und zum Drucksensor nicht von dem Arbeitsfluid benetzt werden. Dazu dichten eine Wellendichtung (11) und eine statische Dichtung (12) die Pumpe (2) gegen den Elektromotor (3) ab, und eine statische Dichtung (13) dichtet die Bohrung (7) und den benetzten Teil des Drucksensors (8) gegen den elektrischen Teil des Drucksensors und die Umgebung ab.

Damit die Fördermenge der Pumpe vorrangig von der Drehzahl des Elektromotors und der Druckdifferenz zwischen den Leitungen (5) und (6) abhängt, und erheblich weniger von der Temperatur des Arbeitsfluids, sind die erste Leitung (5) und die zweite Leitung (6) zur Pumpe innerhalb des Pumpengehäuses (10) durch eine Drossel (14) verbunden. Die Drossel ist Teil des Pumpenaggregats, damit bei einem Test des Pumpenaggregats vor dem Einbau die Arbeitsweise der Drossel mit erfasst wird.

### Liste der Bezugszeichen

- 1.: Pumpenaggregat
- 2.: Pumpe
- 3.: Elektromotor
- 4.: Steckverbindung
- 5.: Leitung
- 6.: Leitung
- 7.: Bohrung
- 8.: Drucksensor
- 9.: Gehäuse (Stecker)
- 10.: Pumpengehäuse
- 11.: Wellendichtung
- 12.: Dichtung
- 13.: Dichtung
- 14.: Drossel
- 15.: Motorgehäuse

## Patentansprüche

1. Ein Pumpenaggregat (1) mit einer hydrostatischen Pumpe (2), einem Elektromotor (3), einem Drucksensor (8), einer Drossel (14) und einer Steckverbindung (4) ist elektrisch über die Steckverbindung (4) mit einer elektrischen Steuerung und fluidisch mit einer ersten Leitung (5) und einer zweiten Leitung (6) mit einem Verbraucher oder einer Mehrzahl von Verbrauchern verbindbar, wobei die zweite Leitung (6) durch mindestens eine Bohrung (7) mit dem Drucksensor (8) verbindbar ist, der mit einem elektrische Bauteile und elektrische Leitungen enthaltenden Gehäuse des Pumpenaggregats (1) ein gemeinsames Gehäuse aufweist, und wobei die erste Leitung (5) und die zweite Leitung (6) zur Pumpe innerhalb des Pumpengehäuses (10) durch die Drossel (14) verbindbar sind,
**dadurch gekennzeichnet, dass**
das Pumpenaggregat (1) in ein übergeordnetes Aggregat, das die erste und die zweite Leitungen (5, 6) enthält, einschiebbar ist.

2. Pumpenaggregat nach Anspruch 1, **dadurch gekennzeichnet, dass** die Abdichtung für das Arbeitsfluid der Pumpe (2) zur Umgebung hin zwischen der Pumpe (2) und dem Elektromotor (3) einerseits und am Drucksensor (8) andererseits so erfolgt, dass alle elektrischen Leitungen zum Elektromotor und zum Drucksensor nicht von dem Arbeitsfluid benetzt werden.

3. Pumpenaggregat nach einem der Ansprüche 1 bis 2, **dadurch gekennzeichnet, dass** eine Wellendichtung (11) und eine statische Dichtung (12) die Pumpe (2) gegen den Elektromotor (3) abdichten.

4. Pumpenaggregat nach einem der Ansprüche 1 bis 3, **dadurch gekennzeichnet, dass** eine statische Dichtung (13) die Bohrung (7) und den benetzten Teil des Drucksensors (8) gegen den elektrischen Teil des Drucksensors, das Innere des Gehäuses (9) oder des Gehäuses (15) und die Umgebung abdichtet.

## Claims

1. A pump unit (1) having a hydrostatic pump (2), an electric motor (3), a pressure sensor (8), a throttle (14) and a plug-in connection (4) is connectable electrically via the plug-in connection (4) to an electric controller and fluidically by means of a first line (5) and a second line (6), to a load or a plurality of loads,
the second line (6) being connectable to the pressure sensor (8) through at least one bore (7), which, with a housing of the pump unit (1) that contains electric components and electric lines, has a common housing, and the first line (5) and the second line (6) being connectable to the pump within the pump housing (10) through the throttle (14),
**characterized in that**
the pump unit (1) can be inserted into a higher-order unit which contains the first and second lines (5, 6).

2. Pump unit according to Claim 1, **characterized in that** the sealing for the working fluid of the pump (2) relative to the environment between the pump (2) and the electric motor (3) on the one hand, and on the pressure sensor (8), on the other hand, is made such that all electric lines to the electric motor and to the pressure sensor are not wetted by the working fluid.

3. Pump unit according to either of Claims 1 and 2, **characterized in that** a shaft seal (11) and a static seal (12) seal off the pump (2) relative to the electric motor (3).

4. Pump unit according to one of Claims 1 to 3, **characterized in that** a static seal (13) seals off the bore (7) and the wetted part of the pressure sensor (8) relative to the electric part of the pressure sensor, the interior of the housing (9) or of the housing (15) and the environment.

## Revendications

1. Groupe motopompe (1) comprenant une pompe hydrostatique (2), un moteur électrique (3), un capteur de pression (8), un étranglement (14) et une connexion enfichable (4), pouvant être connecté électriquement par le biais de la connexion enfichable (4) à une commande électrique et fluidiquement par une première conduite (5) et une deuxième conduite (6) à un consommateur ou à une pluralité de consommateurs,
la deuxième conduite (6) pouvant être connectée à travers au moins un alésage (7) au capteur de pression (8) qui présente un boîtier commun avec un boîtier du groupe motopompe (1) contenant des composants électriques et des conduites électriques, et la première conduite (5) et la deuxième conduite (6) pouvant être connectées à la pompe à l'intérieur du boîtier de pompe (10) par l'étranglement (14),
**caractérisé en ce que**
le groupe motopompe (1) peut être enfoncé dans un groupe supérieur qui contient la première et la deuxième conduite (5, 6).

2. Groupe motopompe selon la revendication 1, **caractérisé en ce que** l'étanchéité pour le fluide de travail de la pompe (2) par rapport à l'environnement est réalisée entre la pompe (2) et le moteur électrique (3) d'une part et au niveau du capteur de pression (8) d'autre part de telle sorte que toutes les conduites électriques allant au moteur électrique et au capteur de pression ne soient pas mouillées par le fluide de travail.

3. Groupe motopompe selon l'une quelconque des revendications 1 et 2, **caractérisé en ce qu'**un joint d'étanchéité d'arbre (11) et un joint d'étanchéité statique (12) étanchéifient la pompe (2) par rapport au moteur électrique (3).

4. Groupe motopompe selon l'une quelconque des revendications 1 à 3, **caractérisé en ce qu'**un joint d'étanchéité statique (13) étanchéifie l'alésage (7) et la partie mouillée du capteur de pression (8) vis-à-vis de la partie électrique du capteur de pression, de l'intérieur du boîtier (9) ou du boîtier (15) et de l'environnement.
